# EUROPEAN PATENT SPECIFICATION

(11) **EP 2 202 867 B1**
(45) Date of publication and mention of the grant of the patent: **18.04.2018**
(21) Application number: 09180171.2
(22) Date of filing: 21.12.2009
(51) Int. Cl.: H02K 1/14, H02K 1/27

(54) **Slim type stator**
Schlanker Stator
Stator de type mince

(30) Priority: 23.12.2008 KR 20080132124
(43) Date of publication of application: 30.06.2010
(73) Proprietor: Amotech Co., Ltd., Namchon-dong, Namdong-ku Incheon 405-846 (KR)
(72) Inventor: Lee, Jong Hoon, 407-320, Incheon (KR); Lee, Nam Hun, Gyeonggi-do,441-390 (KR)
(74) Representative: Lambacher, Michael

(56) References cited:
- EP-A2- 1 684 399
- WO-A1-2008/123735
- WO-A2-2006/075903

## Description

### BACKGROUND OF THE INVENTION

### 1. Field of the Invention

The present invention relates to a slim type stator that is used to make a BLDC (Brushless Direct-Current) motor having a stator of a division core structure.

### 2. Description of the Related Art

In general, a drum-washing system performs washing using a frictional force between a rotating drum and washes according to a delivered motor drive force, at a state where a detergent, cleaning water, and washes are engaged in a drum, to thereby cause few damages of washes, and prevent washes from getting tangled, and provide an effect of washing washes by striking and rubbing the washes.

Conventional drum-washing machines are classified into an indirect drive system in which a drive force of a motor is transferred to a drum indirectly through a belt that is wound between a motor pulley and a drum pulley, and a direct drive (DD) system in which a shaft that is connected to a rotor of a BLDC motor is connected directly to a drum, so that the motor drive force is immediately transferred to the drum.

Here, a belt-pulley drive system that does not transfer a drive force of a motor directly to a drum but transfers the motor drive force through a belt that is wound between a motor pulley and a drum pulley causes an energy loss during a transfer process of a drive force and generates much noise during a transfer process of power.

Therefore, to solve problems of such an existing drum-washing machine, use of a direct drive type drum-washing machine that uses a BLDC motor is being expanded.

Meanwhile, medium-size/small-size drum-washing machines of wash capacity of 5-8 Kg are being installed in a built-in system, in order to enhance an efficient practical use of an indoor residing space in Japan and Europe.

In this built-in system, size of a given installation space where a washing machine can be placed is usually established into a space of 600mm wide X 600mm long X 600mm high. When considering a wash capacity of a medium-size/small-size drum-washing machine, a space (length) where a drive apparatus can be established from a tub of the drum-washing machine to a rear housing of the drum-washing machine is determined into about 45mm.

In this case, the tub is elastically supported by a spring and a damper in the inside of a housing of a drum-washing machine so as to absorb impact at the time of a forward/backward rotational drive of a basket that is rotatably supported in the inside of the tub.

Therefore, in order to prevent the tub from being damaged when the tube moves back and forth, there is a need to secure a clearance space (length) of about 15-20mm. Accordingly, a space (length) where the drive apparatus can be installed is given into 25mm that is obtained by subtracting 20mm from 45mm.

In the built-in style drum-washing machine, the space (length) where the drive apparatus can be installed is narrow. As a result, the drive apparatus, that is, the drive motor that can satisfy the 25mm thickness condition has not been provided.

That is, a drive motor that has been developed up to the present is developed for use in a large-sized drum-washing machine of 63mm or more thick. Therefore, if the built-in style drum-washing machine is implemented in a direct drive (DD) system by using the large-sized drive motor, there is a problem of unavoidably having to reduce length of a tub to accordingly cause a decrease in a wash capacity.

Such being the case, a belt-pulley indirect drive system has been employed according to conventional art. That is, in the case of the conventional art, a motor should be disposed in the lower portion of a drum-washing machine, and a basket should be indirectly driven through a belt that is wound on a pulley, in order to avoid reducing of size of a tub. As a result, the conventional drum-washing machine has a problem that a motor drive force is not well transferred to a drum. Therefore, to apply the motor to the drum-washing machine, a need to shorten size of the motor has increased.

Therefore, development of a slim type drive motor that can satisfy the 25mm thickness condition that can be employed in a direct drive (DD) system in a medium-size/small-size drum-washing machine that is of a wash capacity 5-8 Kg is required.

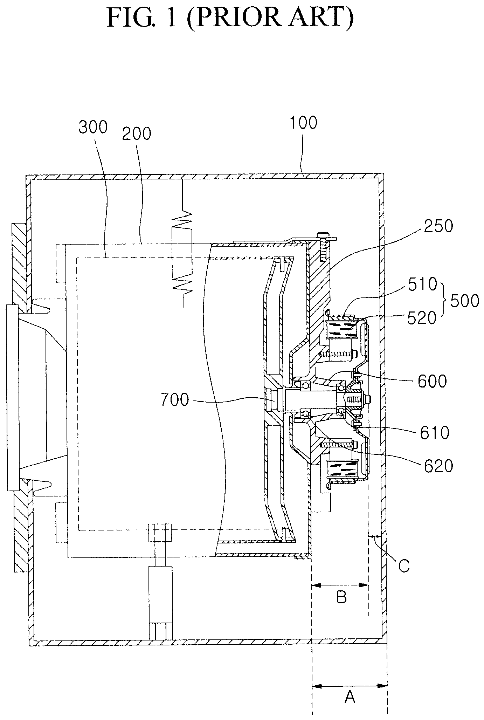

Hereinbelow, referring to accompanying FIG. 1, structure of a conventional direct drive type drum-washing machine that uses a BLDC motor and has been disclosed in Korean Laid-open Patent Publication No. 2005-12399 will be briefly described as follows.

FIG. 1 is a schematic diagram showing a conventional direct drive (DD) type drum-washing machine.

Referring to FIG. 1, a tub 200 is installed in the inner side of a cabinet 100, and a drum (or basket) 300 is rotatably installed at the center of an inner side of the tub 200. A motor 500 that makes the drum 300 rotate is installed in a support bracket 250 that is combined at the rear side of the tub 200.

The motor 500 includes: a drive shaft 700 that is rotatably combined with two upper/lower bearings 610 and 620 provided in a bearing housing 600 that is installed in a support bracket 250 that is opposed to the central portion of the rear surface of the tub 200; a core style stator 520 that forms a rotating magnetic field by laminating a number of iron cores, winding a coil on the laminated iron cores, and making electric current flow through the coil; and an outer mode rotor 510 that is formed by making magnets disposed on the outer circumference of the stator in which the rotor 510 is rotated by the rotating magnetic field that is formed by the stator 520 to thus make the drive shaft 700 rotate.

Here, the rotor 510 that forms the motor 500 is engaged with the center of the rear end of the drive shaft 700, and the stator 520 that is engaged with and fixed to the tub 200, that is, the rear wall of the support bracket 250 and that forms the motor 500 together with the rotor 510 is located in the inner side of the rotor 510.

If an operation button is pressed in order to drive a washing machine of FIG. 1, electric power is applied to the stator 520 of the motor 500, and thus a rotating magnetic field is generated in the stator 520. The rotating magnetic field is generated from the leading end of a winding portion (not shown) by the coil wound on the winding portion (not shown) of the stator 520. Accordingly, the rotor 510 that is close to the leading end of the winding portion (not shown) rotates according to the Fleming's left-hand rule.

Therefore, the drive shaft 700 that is combined with the upper and lower bearings 610 and 620 provided in the bearing housing 600 and the tub 200 is rotated by rotation of the rotor 510. As a result, the drum 300 performs a periodic reversal operation to thus wash laundry.

As described above, the conventional direct drive type drum-washing machine employs the motor 500 of the outer mode rotor structure. Thus, the motor 500 is installed in a space between the tub 200 and the rear surface of the drum-washing machine. Here, a rear space "A" from the tub 200 to the rear surface of the drum-washing machine is divided into a motor installation space "B" that is occupied by the motor 500 and a shaking space "C" of about 20mm of the tub 200.

By the way, the conventional motor 500 illustrated in FIG. 1 includes a number of cooling fins and cooling holes in the neighborhood of the tub side of the rotor 510, thereby cooling heat that is produced from the stator 520. A cooling fin structure that is extended into the inside of the motor in the conventional motor 500 and the support bracket 250 that is combined with the rear side of the tub 200 act as an obstacle factor to design a slim type motor, and are mainly used for a high-capacity (wash capacity of 10Kg) washing machine.

In general, a motor used as a drum drive apparatus of a washing machine includes a stator that is formed by winding coil on an integrally built-in type stator core or a division stator core that mostly uses a single outer mode rotor system, in order to get a big rotational inertial force.

Therefore, to design such a conventional outer mode rotor style drive motor into a slim type motor of 25mm thick that can be employed in a built-in drum-washing machine with a direct drive system, may have a problem of dissatisfying a driving torque that is required in a medium-size/small-size drum-washing machine having a wash capacity of 5-8Kg.

Meanwhile, a core style BLDC motor has a structure that a magnetic circuit is symmetrical to a radial direction around an axis, and thus generates less axial vibratory noise. Accordingly, the core style BLDC motor is suitable for low speed rotation. In addition, a portion where a gap occupies for direction of a magnetic path is few in the case of the core style BLDC motor. Accordingly, the core style BLDC motor can get a high flux density even if magnets of a low magnetic performance are used or a quantity of magnets are reduced. As a result, the core style BLDC motor has advantages of a big torque and a high efficiency.

However, such a core structure, that is, a yoke structure may cause a material loss of a yoke when manufacturing a stator. In addition, a special expensive dedicated winding machine should be used in order to wind coil on the yoke due to a complex structure of the yoke when mass-producing. In addition, a mold investment cost at stator manufacturing is high to thus cause a high facility investment cost, in the case of the core style BLDC motor.

In the core style AC or BLDC motor, especially the radial type core motor, it is a very important factor that decides competitive power of a motor to form the stator core into a perfect division type, since coil can be wound on division cores at a high efficiency using an inexpensive general-purpose winding machine. However, on the contrary, a low efficiency winding operation is performed using an expensive dedicated winding machine, in the case of an integrally built-in type stator core. Accordingly, a manufacturing cost of a motor is heightened in the case of an integrally built-in type stator core.

It may cause a problem that does not form a perfect magnetic circuit when the stator core is combined with a single rotor, to form the stator core into a perfect division type in order to get an effectiveness of coil winding, in the case of the radial type core motor.

In this point of view, the same applicant as that of this invention proposed a BLDC motor that can form a stator core into a perfect division type by disclosing a double rotor/single stator structure of the radial core type in the Korean Laid-open Patent Publication No. 2004-0002349.

In the Korean Laid-open Patent Publication No. 2004-0002349, permanent magnet rotors are disposed in both inner and outer sides of a stator core. Accordingly, a flow of a magnetic path is formed by the inner and outer permanent magnets and the rotor yoke. As a result, it is possible to perform perfect division of the stator core, to thus propose a structure of greatly heightening productivity of the stator core and power of the motor by individual coil winding.

In addition, a schematic method of preparing an integrally built-in type stator was proposed in the Korean Laid-open Patent Publication No. 2004-0002349, in which a number of division core assemblies on which coils are wound according to division of cores and then the division core assemblies are molded in an annular form by an insert molding that uses a thermosetting resin.

However, a stator assembly structure/method of assembling a number of individual cores before insert molding, to thus perform an effective assembly when coils are mutually connected, was not proposed in the Korean Laid-open Patent Publication No. 2004-0002349.

Considering this point, a structure of greatly heightening productivity of stator assembly was proposed in the Korean Laid-open Patent Publication No. 2005-0000245, that includes: an annular core support plate that makes a number of division core assemblies on which coils are wound accommodated at a certain interval and supported in respective bobbins, and simultaneously a number of coils connected per phase; and an automatic position set/support unit that makes the division core assemblies automatically position set and supported at a certain interval.

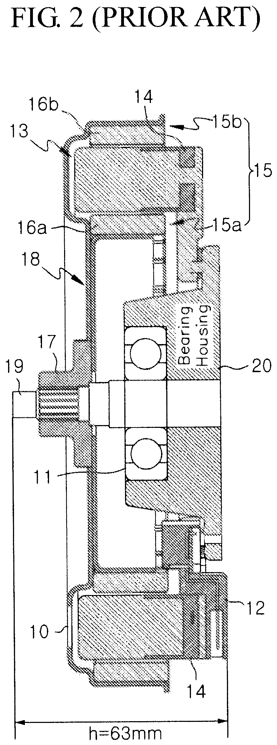

The above-described BLDC motor will be described in more detail with reference to FIG. 2.

Referring to FIG. 2, the BLDC motor includes: a stator 13 in which an inner circumference of a core support plate 14 is supported by various coupling units such as bolts/nuts in a housing 20 and a number of perfect division stator cores are assembled in an annular form with coils wound on an outer circumference of respective bobbins; a rotor 15 of a double rotor structure in which a number of magnets 16a and 16b are disposed in an annular form with respective magnetic gaps in the inner and outer circumferences of the stator 13, and thus an inner rotor 15a and an outer rotor 15b are supported by a yoke frame 18; and a rotating shaft 19 that is rotatably supported through a bearing 11 in the housing 20, and is connected through a bushing 17 at the center of the yoke frame 18.

The stator 13 is integrally formed in an annular form by insert molding using a thermosetting resin, at a state of temporarily assembling a number of stator core assemblies in the annular core support plate 14 with coils wound on an outer circumference of respective bobbins.

In FIG. 2 a reference numeral 12 denotes for example, a terminal block for supplying electric power for stator coils of a three-phase drive system, and a reference numeral 10 denotes a cooling hole.

In the case of the above-described motor, the core support plate 14 is arranged on the lower portion of the stator 13, to thus provide a connection space to connect between coils that are wound on the number of division stator cores. In addition, since the terminal block 12 for supplying electric power for motor coils is projected from a stator holder, the motor was produced thickly in which the whole thickness of the motor is about h=63mm as illustrated in FIG. 2. Also, since a drum diameter of the drum-washing machine is as large as 220-260mm in the case that the above-described motor is applied to a drum-washing machine, diameter of the annular core support plate should be also large in proportion to the drum diameter. As a result, the BLDC motor of FIG. 2 is very disadvantageous in view of a manufacturing cost and an assembly of the annular core support plate.

Since the whole thickness of the motor is thick as described above, it is required in order to make the motor thin that a number of stator cores on which coils are wound are integrated by insert molding using a thermosetting resin preferably without using the above-described annular core support plate.

Meanwhile, in the case of a large-size motor, a number of stator poles and a number of rotor poles are usually mixed. When the motor employs a division core system, a successive winding on cores of a number of group made of a number of division cores to then assemble the number of the division cores is desirable than an individual winding on a number of division cores to then assemble the number of the division cores, in view of assembly productivity.

The technology of manufacturing a motor by assembling a number of division cores without using any annular core support plate by this successive winding was disclosed in the Korean Patent Registration No. 663641 to the same applicant as that of this application.

In addition, the motor proposed in the above-described Korean Patent Registration No. 663641 cannot be applied as a slim type motor that can be employed in a direct drive type for a built-in type drum-washing machine, because connection of coils wound on a number of division cores is executed in the lower space of a stator, a terminal block for supplying electric power for motor coils is projected in a thickness direction from a stator holder, and an inner extension portion of a stator holder for coupling a housing (for example a tub) of a washing machine does not have a slim structure.

EP 1684399 A2 discloses a stator for the number of bobbins to form an annular division stator core assembly. Each bobbin comprises flanges formed at one side of the bobbin and the other side thereof, respectively. Adjoining division cores are coupled through a coupling protrusion and a coupling groove that are formed at either side end of the first and second flanges, respectively.

A three-faced coil is wound on bobbins of each phase.

WO 2008/123735 A1 discloses a stator with a number of division cores and a number of bobbins. Each bobbin comprises flanges formed at one side of the bobbin and a three-faced coil is consecutively wound on the bobbins for each phase. A stator holder for the division stator core assembly is also provided by winding the coils on the bobbins by an insert molding that uses a thermosetting resin.

### SUMMARY OF THE INVENTION

To overcome inconveniences of the conventional art, it is an object of the present invention to provide a direct drive apparatus for use in a built-in type drum-washing machine that is installed in an allowable 25mm space without reducing size of a tub that relates with a wash capacity in a built-in type medium-size/small-size drum-washing machine, to thereby make a basket in the inside of the tub rotate in a direct drive mode.

It is another object of the present invention to provide a slim type stator of a division core structure that can be manufactured in a slim type, in which coils are successively wound on a number of division stator cores per phase of U, V, and W, to accordingly omit connection works between a number of division core assemblies on which coils are wound per phase, and a temporary assembly between adjoining division core assemblies is performed by using a coupling between bobbins in order to perform a molding work with a thermosetting resin, to thereby remove a PCB (Printed Circuit Board) for assembling the division cores.

It is still another object of the present invention to provide a slim type stator of a division core structure that can be manufactured in a slim type, in which a space factor of coils between adjoining division cores is lowered by increasing diameter of a motor and the number of slots and poles in a stator and a rotor, and a terminal assembly holder and a terminal housing that connect a three-phase coil terminal with an electric power terminal block are disposed in a space between the secured cores, to thereby minimize height of the terminal block.

It is yet another object of the present invention to provide a slim type stator and a slim type motor using the same for use in a built-in type drum-washing machine, in which a bushing of a rotor that is coupled with a rotating shaft and an inner extension portion of a stator that is coupled with a tub are disposed at the center portion of the motor, to thereby minimize an axial length (that is, thickness) and minimize vibration occurring at the time of rotation of the rotor.

It is yet still another object of the present invention to provide a motor for use in a built-in type drum-washing machine that is appropriate for driving a drum-washing machine that operates in a quick inversion method since an efficiency of the motor is high and a drive torque of the motor is high, by employing a double-rotor structure that is a slim structure and does not reduce size of magnets.
It is a further another object of the present invention to provide a slim type motor for use in a drum-washing machine in which the slim type motor can be applied for the drum-washing machine although a slant angle of a slant drum-washing machine is made large by minimizing an axial length, lowering the whole height, and increasing an outer diameter.

To achieve the objects, according to the present invention, there is provided a stator for use in a BLDC (Brushless Direct-Current) motor with the features of claim 1. Further embodiments of the invention are defined in the dependent claims 2 and 3. The stator further comprises a terminal assembly holder that comprises: first through third terminal housings on which the three-phase coils are respectively wound and that are used to connect respective one-side coil terminals of the three-phase coils and respective outer withdrawal lead wires of the there phases; and a common terminal housing that is used to form a neutral point by inter-connecting the other-side coil terminals of the respective three-phase coils, the first through third terminal housings and the common terminal housing are arranged by insertion between the division cores.
Preferably but not necessarily, the respective bobbins further comprise first and second coupling protrusions at the center of the lower end of the first and second flanges, and wherein the terminal assembly holder further comprises coupling holes that are combined with and fixed to the first and second coupling protrusions, respectively.
Preferably but not necessarily, the stator holder further comprises an annular inner extension portion whose leading end is bent in two levels so as to be fixedly combined with a tub combiner that is used in a drum-washing machine and that is projected inwards from the center portion of a stator, to thus be extended to the direction of the center of gravity of the stator from the outer side of the stator.
Preferably but not necessarily, the annular inner extension portion comprises a number of stud nuts that are disposed at a certain interval, in which a number of weight reduction grooves are disposed between the stud nuts.
Preferably but not necessarily, the coils wound on the division stator cores are made of copper (Cu) or aluminum (Al).

Preferably but not necessarily, the stator is used in a motor having a double-rotor-single-stator structure.

Preferably but not necessarily, the motor is used in a direct drive apparatus for directly driving a basket of a built-in drum-washing machine.

### BRIEF DESCRIPTION OF THE DRAWINGS

The above and/or other aspects of the present invention will become apparent and more readily appreciated from the following description of the exemplary embodiments, taken in conjunction with the accompanying drawings in which:
FIG. 1 is a schematic diagram showing a conventional direct drive type drum-washing machine;
FIG. 2 is a cross-sectional view of a motor that is formed by assembling a number of division stator core assemblies on a core support plate;
FIG. 3 is a cross-sectional view of a slim type motor according to an embodiment of this invention that is cut along the axial direction;
FIG. 4 is a perspective view of a division stator core used in a slim type motor according to this invention;
FIGs. 5A and 5B are a front view and a cross-sectional view of the division stator core of FIG. 4, respectively;
FIG. 6 is a perspective view for explaining a coupling state of the division stator core of FIG. 4;
FIG. 7 is a perspective view of a completed division stator core assembly that is formed by assembling the division stator cores shown in FIG. 4 in an annular form;
FIG. 8 is a perspective view for explaining a terminal assembly holder that is disposed in the completed division stator core assembly;
FIG. 9 is a conceptual diagram for explaining a coil winding configuration and connection state of a three-phase drive system for the division stator core assembly of FIG. 8;
FIG. 10A is a reference perspective view for explaining a U-phase terminal that is assembled with the terminal assembly holder of FIG. 8;
FIG. 10B is a reference perspective view for explaining a common terminal that is assembled with the terminal assembly holder of FIG. 8;
FIGs. 11A through 11C are a perspective view, a bottom plan view and a top plan view of a stator that is used in a slim type motor according to this invention, respectively; and
FIGs. 12A through 12C are a perspective view, a bottom plan view and a top plan view of a rotor that is used in a slim type motor according to this invention, respectively.

### DETAILED DESCRIPTION OF THE INVENTION

Hereinbelow, a slim type stator that is used to make a BLDC (Brushless Direct-Current) motor having a stator of a division core structure and a double rotor for use in a drum-washing machine, a slim type motor having the same, and a direct drive apparatus for use in the drum-washing machine according to embodiments of the present invention will be described with reference to the accompanying drawings.

Thickness (or height) of a slim type motor according to an embodiment of this invention is implemented to be about 25mm or below so that the slim type motor is adapted to be employed in a narrow motor installation space in a direct drive apparatus for use in a medium-size/small-size built-in type drum-washing machine or another apparatus that needs a motor.

The slim type motor according to the embodiment of this invention has a slim structure and generates a high driving torque that is suitable in a quick inversion mode drive of a drum-washing machine. In addition, the slim type motor according to the embodiment of this invention employs a double rotor structure that does not reduce size of magnets comparing with the conventional art, considering a coil winding workability by perfect division of a stator core. As a result, a magnetic circuit of the motor is designed into a double-rotor/single-stator structure that circulates an "inner rotor-division core-outer rotor-adjoining division core."

In addition, a stator according to an embodiment of this invention is of a division core structure that can be manufactured in a slim type, in order to obtain a slim thickness, in which coils are successively wound on a number of division stator cores per phase of U, V, and W, to accordingly omit connection works between a number of division core assemblies on which coils are wound per phase, and a temporary assembly between adjoining division core assemblies is performed by using a snap coupling between bobbins in order to perform a molding work with a thermosetting resin, without using any PCB (Printed Circuit Board) or supporter necessary for assembling the division cores.

In general, as the number of poles of a motor becomes large, the number of rotations (rpm) becomes low, as in the present invention. The drum-washing machine does not require a high number of rotations (rpm). However, the smaller number of coils are wound on respective stator cores.

Considering this point, the present invention a slim type stator of a division core structure that can be manufactured in a slim type, in which a space factor of coils between adjoining division cores is lowered by increasing diameter of a motor and the number of slots and poles in a stator and a rotor, and a terminal assembly holder and a terminal housing that connect a three-phase coil terminal with an electric power terminal block are disposed in a space between the secured cores, to thereby minimize height of the terminal block.

Moreover, in this invention, a bushing of a rotor that is combined with a rotating shaft of a motor and an inner extension portion of a stator that is combined with a tub are disposed at the center of gravity of the motor and its circumference, to thereby intercept thickness of the motor from increasing to the axial direction of the motor.

Hereinbelow, preferred embodiments of the present invention will be described in detail with reference to the accompanying drawings.

### A. Overall structure of the motor

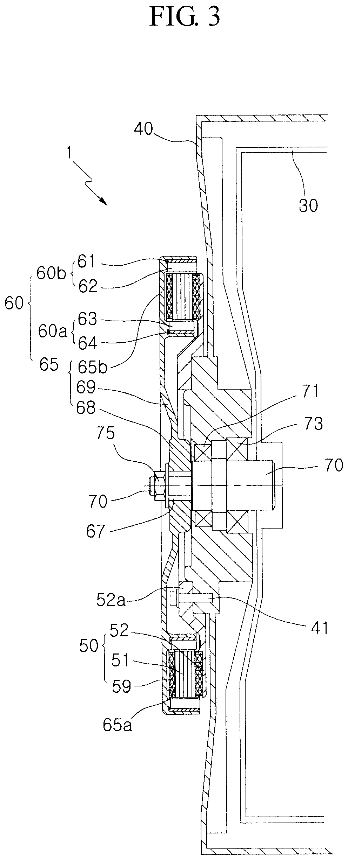

FIG. 3 is a cross-sectional view of a slim type motor according to an embodiment of this invention that is cut along the axial direction of the slim type motor.

Referring to FIG. 3, a slim type motor 1 is installed on the rear surface of a medium-size/small-size built-in drum-washing machine to then be used to rotationally drive a drum or a wash tub in a forward/backward direction.

The slim type motor 1 according to this invention includes: a stator 50 that is integrally formed by an annular stator holder 52 that is manufactured by winding coils 59 on the outer circumference of bobbins (not shown) and then insert molding a number of division stator cores 51 using a thermosetting resin; a rotor 60 that includes an inner rotor 60a in which a number of magnet 63 and a ring-shaped yoke 64 are disposed in an annular form, with a predetermined magnetic gap in the inner and outer circumference portions of the stator 50, an outer rotor 60b in which a number of magnets 62 and a ring-shaped outer yoke 61 are disposed in an annular form, and a rotor support frame 65 that mutually connects one end of the inner rotor 60a and one end of the outer rotor 60b and is extended to the central portion of the rotor to then be combined with an involute serration bushing 67; and a rotating shaft 70 that is combined with the rotor 60 at the central portion of the rotor 60, for example, through the involute serration bushing 67, and whose one end are fixedly connected with a fixing nut 75 and whose other end is rotatably supported through at least one pair of bearings 71 and 73 that are installed on the rear surface of a tub 40.

The stator 50 is formed by integrally molding a number of division stator cores 51 that have been perfectly divided in an annular form by an annular form stator holder 52. The stator holder 52 is extended inwards and supported to the tub 40 of the washing machine by a fixing bolt 41. In this case, the bearings 71 and 73 rotatably support the double rotor 60 that is combined to the rotating shaft 70 through the bushing 67. The leading end of the rotating shaft 70 is extended into the tub 40 of the washing machine and fixedly combined with a basket 30. Thus, the basket 30 rotates according to rotation of the rotating shaft 70.

Here, when the slim type motor is used in a drive apparatus for a large-capacity washing machine, it may be designed into a 27-slot-24-pole or 27-slot-36-pole structure, for example. However, the slim type motor according to the present invention is designed to have diameter of the motor relatively greatly increased and thus have a 36-slot-36-pole structure, for example, in order to lower a space factor of coils with respect to a stator. Accordingly, the slim type motor according to the present invention is designed to have a structure of having increased the number of cores of the stator and the number of magnets of the rotor.

Therefore, the inner rotor 60a and the outer rotor 60b of the double rotor 60 are attached on the inner and outer side surfaces of inner and outer yokes 64 and 61 that are formed of forty-eight (48) magnets 63 and 62 in an annular form, respectively. The built-in type stator 50 including thirty-six (36) division stator cores 51 are inserted into an annular space in the double rotor 60.

Therefore, the motor 1 is formed of a radial core type motor that is composed of the double rotor 60 in which the inner rotor 60a and the outer rotor 60b are supported to the rotor support frame 65 and the single stator 50.

### B. Structure of stator and process of manufacturing the stator

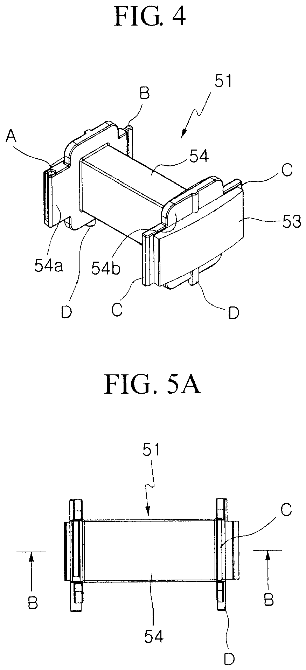

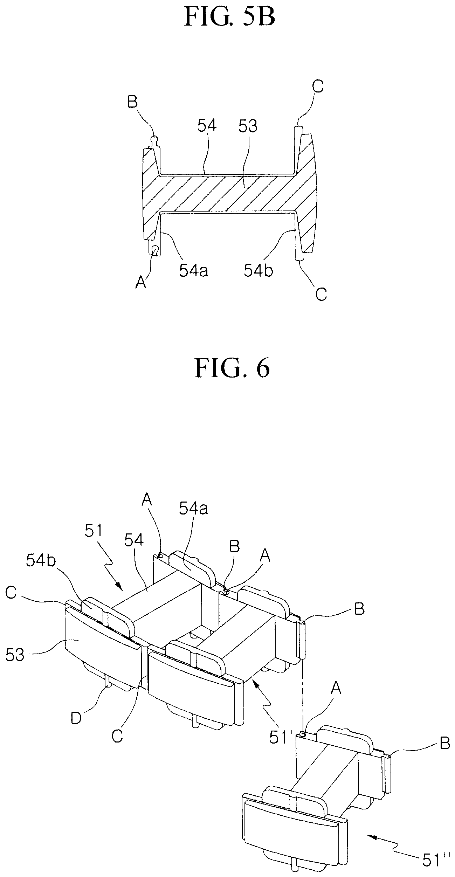

FIG. 4 is a perspective view of a division stator core used in a slim type motor according to this invention, and FIGs. 5A and 5B are a front view and a cross-sectional view of the division stator core of FIG. 4, respectively.

Referring to FIGs. 4, 5A and 5B, a division stator core 51 is formed by winding a coil (not shown) on the outer circumference of an insulation bobbin 54 at a state of integrally forming the insulation bobbin 54 surrounding an inner division core 53. Then, an annular built-in type stator 50 of FIG. 3 is obtained by assembling a number of division stator cores 51 in an annular form, and then insert molding the outer side surfaces of the number of the division stator cores 51 using a thermosetting resin. Copper (Cu) is usually used as a material of the coil. However, aluminum (Al) whose specific gravity is one third in comparison with Cu and whose price is relatively inexpensive can be used, in order to reduce weight of the motor. In general, it is hard to apply aluminum (Al) as a motor coil because an oxidation problem occurs in aluminum. However, such an oxidation problem does not occur in the present invention since the outer portions of stator core assemblies on which coils are wound are coated by using the thermosetting resin.

Also, the division core 53 can be used by laminating a number of silicon steel plates or sintering a soft magnetic compound whose magnetic permeability is high and whose electrical resistance is high, in order to prevent a magnetic flux from being lost by an eddy current that can be generated at the time of rotation of a motor.

The I-type bobbin 54 is composed of an intermediate rectangular vessel portion on which a coil is wound, and inner and outer flanges 54a and 54bs that are bent and extended at the inner and outer portions of the rectangular vessel portion, respectively. The rectangular vessel portion formed between the inner and outer flanges 54a and 54bs provides a space on which a coil is wound. Here, it is preferable that the inner and outer flanges 54a and 54bs of the bobbin 54 should be formed so that the outer flange 54b is formed relatively larger than the inner flange 54a.

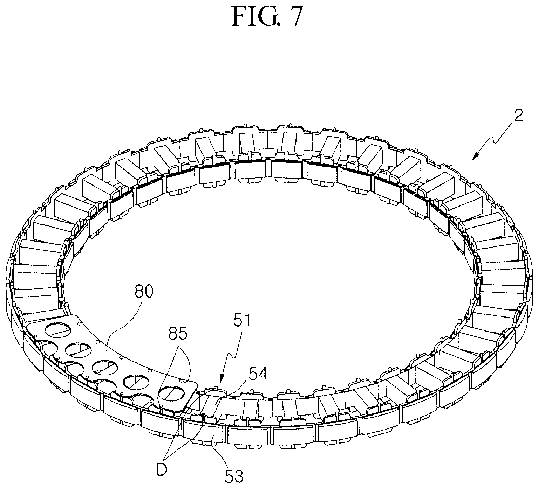

The division stator core 51 includes a coupling groove A and a coupling protrusion B that are perpendicularly formed on both sides thereof to then be coupled between the inner circumferences of the inner flange 54a so that a number of the division stator cores 51 can be assembled in an annular form at a later time. The outer circumference of the outer flange 54b is formed by making circumference forming surfaces C of the outer flange 54b come in contact with those of the adjoining outer flange 54b. First and second coupling protrusions D for assembling a terminal assembly holder 80 of FIG. 7 are provided in the lower portions of the inner and outer flanges 54a and 54b of the bobbin 54, respectively.

FIG. 5A is a front view of the division stator core 51, and FIG. 5B is a cross-sectional view of the division stator core 51 that is cut along a line B-B of FIG. 5A.

Referring to FIG. 5B, it can be seen that the I-type division core 53 is inserted into the inside of the division stator core 51, and the bobbin 54 that surrounds the outer circumference portion of the core is formed along the outer circumference portion of the core. The coupling groove A and the coupling protrusion B are formed in the inner flange 54a of the bobbin 54, and the circumference forming surfaces C are formed in the outside flange 54b thereof.

It is preferable that an assembly between the I-type division core 53 and the bobbin 54 is integrally formed by an insert molding method that uses a thermosetting resin, but is not limited thereto. That is, the assembly between the I-type division core 53 and the bobbin 54 may be assembled by another known method.

A method of manufacturing an annular built-in type stator 50 by assembling a number of division stator cores 51 will be described below.

FIG. 6 is a perspective view for explaining a coupling state of the division stator core of FIG. 4, and FIG. 7 is a perspective view of a completed division stator core assembly that is formed by assembling the division stator cores shown in FIG. 4 in an annular form.

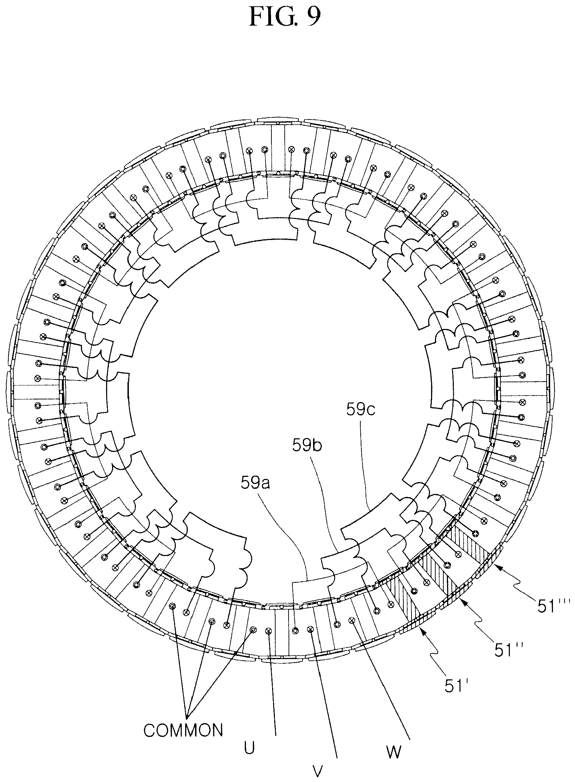

Hereinbelow, for convenience of explanation, states that coils are not wound on the division stator cores have been illustrated, but it is apparent that coils of three phases (U, V, and W) should be wound on the division stator cores at the time of manufacturing the stator 50 by an actual insert molding method. The three-phase coils and connection of the three-phase coils will be described below with reference to FIG. 9.

Referring to FIGs. 6 and 7, a coupling protrusion A is formed at one side of the inner flange 54a of a bobbin 54 of each division stator core 51, and a coupling groove B is formed at the other side thereof. The circumference forming surfaces C are formed in the outside flange 54b thereof. The inner circumference surface of each division stator core 51 is formed as the coupling protrusion B of the division stator core 51 is coupled with the coupling groove A of the adjoining division stator core 51'. If the inner circumference surfaces of the adjoining division stator cores 51 and 51' are coupled with each other, the circumference forming surfaces C of two division stator cores 51 and 51' come in contact with each other to thus form an outer circumference surface.

In this manner, if the coupling protrusion and the coupling groove A of the bobbin 54 in each division stator core 51 are consecutively mutually coupled with each other, a division stator core assembly 2 is completed as illustrated in FIG. 7.

Referring to FIG. 7, a bottom surface of a completed division stator core assembly that is formed by assembling the division stator cores shown in FIG. 4 in an annular form is illustrated in a perspective view, in which the inner circumference surfaces of the adjoining division stator cores are coupled by coupling the coupling groove A with the coupling protrusion B, and the outer circumference surface is formed by the circumference forming surfaces C that come in contact with each other.

A terminal assembly holder 80 for connecting coils is combined with a part of the bottom surface of the division stator core assembly 2. First and second coupling protrusions D that are provided at both ends of the lower portion of the inner and outer circumference surfaces of the division stator core 51 are combined with coupling holes 85 of the terminal assembly holder 80, respectively.

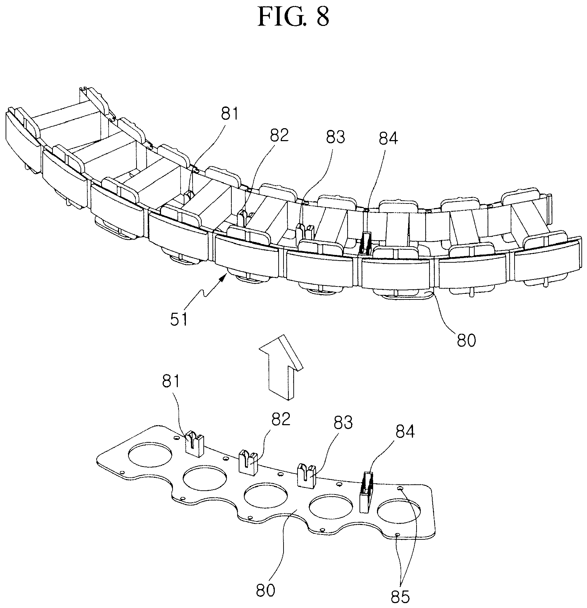

FIG. 8 is a perspective view for explaining a terminal assembly holder that is disposed in the completed division stator core assembly, and FIG. 9 is a conceptual diagram for explaining a state where coils are wound on the division stator core assembly of FIG. 8 and are withdrawn to the terminal assembly holder.

First, referring to FIG. 8, the terminal assembly holder 80 includes a number of coupling holes 85 so as to be combined with the division stator core assembly 2. Also, the terminal assembly holder 80 includes: a U-phase terminal housing 81 for connecting a U-phase terminal of a U-phase coil 59a that is wound on the division stator core assembly 2 with a first lead wire; a V-phase terminal housing 82 for connecting a V-phase terminal of a V-phase coil 59b that is wound on the division stator core assembly 2 with a second lead wire; a W-phase terminal housing 83 for connecting a W-phase terminal of a W-phase coil 59c that is wound on the division stator core assembly 2 with a third lead wire; and a common terminal housing 84 for mutually connecting the coils 59a-59c of the three phases of the U-phase, V-phase, and W-phase. When the respective housings 81, 82, 83, and 84 of the thus-constructed terminal assembly holder 80 are combined with the division stator core assembly 2, the housings 81, 82, 83, and 84 are disposed between the respective division stator cores 51 to then connect the coils. Accordingly, it is possible to manufacture a slim type motor 1, to thereby minimize height of the motor 1.

Hereinbelow, a method of manufacturing the stator 50 will be described with reference to FIGs. 7 through 10.

In this invention, in the case that the stator 50 employs a three-phase drive system, a successive winding is performed per each phase (U, V, or W) as a coil winding for a number of division stator cores 51', 51", and 51"'. In the case that a magnetic circuit of a motor is formed of a 36-slot-48-pole structure, for example, respective coils 59a-59c are successively wound on the twelve division stator cores 51', 51", and 51"' for each phase of U, V, and W, to thereby omit a connection work between the division stator cores on which the coils are wound per phase.

Then, the thirty-six division stator cores 51', 51", and 51"' on which the coils are wound are alternately arranged per each phase of U, V, and W as shown in FIG. 9 and coupling grooves A and coupling protrusions B of respective bobbins 54 for the adjoining division stator cores 51', 51", and 51"' are mutually coupled with each other as shown in FIG. 6, to thereby complete a division stator core assembly 2.

Thereafter, first and second coupling protrusions D that are provided at both ends of the lower portion of the inner and outer circumference surfaces of the division stator core 51 are combined with coupling holes 85 of the terminal assembly holder 80, respectively, to thereby combine the terminal assembly holder 80 for connecting coils 59a-59c with a part of the bottom surface of the division stator core assembly 2, as shown in FIGs. 7 and 8.

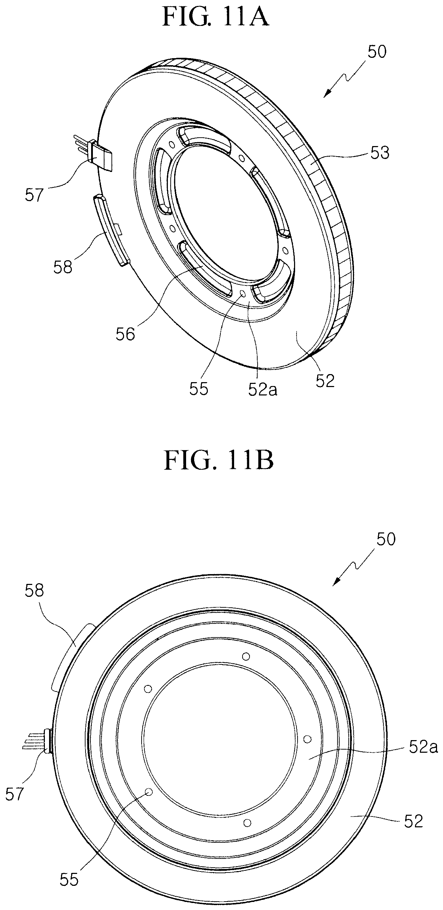

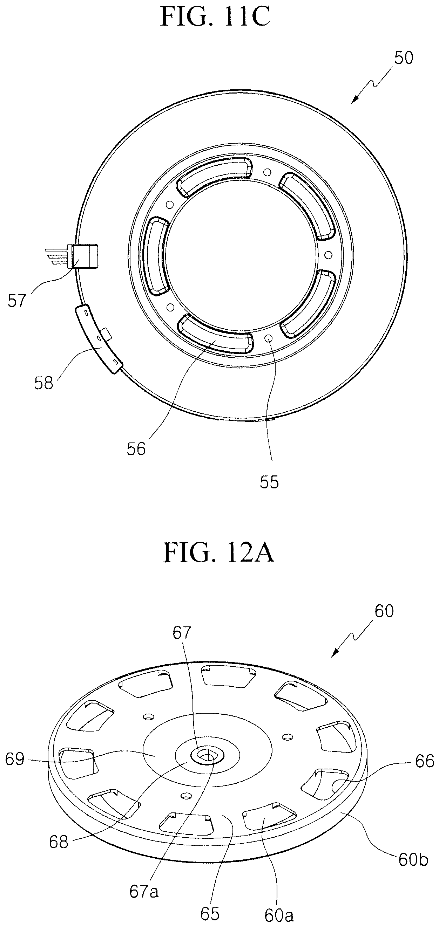

Then, U, V, and W lead wires connects with a wire holder 57 of FIG. 11A using terminal housings 81-83, are connected with one-end terminals of three coils 59a-59c that are consecutively wound on the twelve division stator cores 51', 51", and 51"' per phase, and U, V, and W coils are mutually connected with the other-end terminals of the three coils 59a-59c that are connected with the common terminal housing 84 into which a common terminal COMMON is inserted so as to form a neutral point NP.

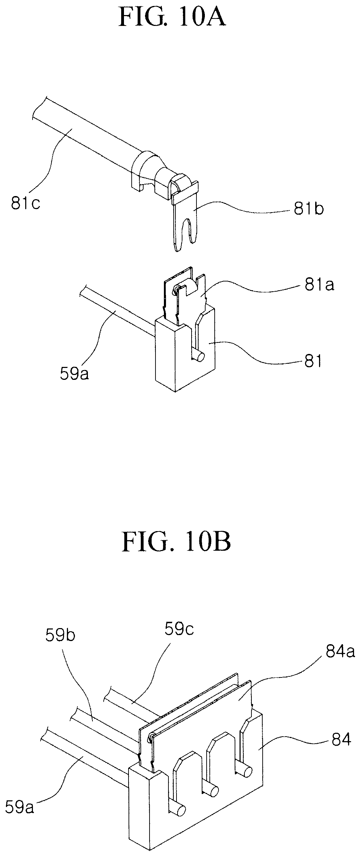

Hereinbelow, a method of assembling the one-end terminals and the other-end terminals of three-phase U, V, and W coils 59a-59c will be described in detail with reference to FIGs. 10A and 10B.

FIG. 10A is a reference perspective view for explaining a U-phase terminal that is assembled with a U-phase terminal housing in the terminal assembly holder of FIG. 8.

Referring to FIG. 10A, a U-phase coil 59a that has been withdrawn as illustrated in FIG. 9 is inserted into the U-phase terminal housing 81. Then, a mag mate terminal 81a is inserted into a groove that is provided in the upper portion of the U-phase terminal housing 81 and an extra U-phase coil that do not need is cut. Then, a poke-in terminal 81b that is connected to the U-phase lead wire is inserted into the mag mate terminal 81a, to then connect each other. In the same manner for V-phase and W-phase terminals, V-phase coil 59b and W-phase coil 59c are inserted into the terminal housings 82 and 83, respectively, and V-phase and W-phase lead wires are connected with the V-phase coil 59b and W-phase coil 59c, respectively.

FIG. 10B is a reference perspective view for explaining a method of forming a neutral point NP by using a common terminal housing that is installed in the terminal assembly holder.

Referring to FIG. 10B, the other-end terminals of the three-phase U, V, and W coils 59a-59c that have been withdrawn as illustrated in FIG. 9 are inserted into three grooves formed on the common terminal housing 84, respectively. When a mag mate terminal 84a for the common terminal is inserted into the common terminal housing 84, the other-end terminals of the three-phase U, V, and W coils 59a-59c are mutually connected with each other by the mag mate terminal 84a, to thus form a neutral point NP.

When termination processing of the three-phase U, V, and W coils 59a-59c is completed by using the terminal assembly holder 80 and housings 81-84, connection of the division stator core assembly 2 is accomplished on the terminal assembly holder 80 that has been inserted into the respective division stator cores 51, to thus form a stator of a slim type structure.

The division stator core assembly 2 whose connected has been completed as aforesaid, is molded by an insert molding method, to complete a stator holder 52 of FIG. 11A.

FIGs. 11A through 11C are a perspective view, a bottom plan view and a top plan view of a stator that is used in a slim type motor according to this invention, respectively.

Referring to FIG. 11A through 11C, a stator 50 is formed by insert molding a number of division stator cores 51 into the inside of the division stator core assembly 2 along the annular outer circumference of the division stator core assembly 2. A stator holder 52 including a number of stud nuts 55 that are engaged with the fixing bolts 41 of FIG. 3 in order to be combined with the tub 40 is extended inwards on the lower portion of the stator 50.

In this case, the inner extension portion 52a of the stator holder 52 combined with the tub 40 is bent and extended in two levels toward the inner-side direction of the annular stator 50 so that thickness of the stator is intercepted from being increased to the axial direction. As a result, the leading end of the inner extension portion 52a is disposed to form a concentric circle with a bushing 67 that is combined with the rotating shaft 70 of a rotor 60 to be described later. In addition, a number of stud nuts 55 that are combined with the tub 40 are disposed at a certain interval in the inner extension portion 52a and a number of weight reduction grooves 56 are arranged between a number of the stud nuts 55.

In addition, a wire holder 57 is provided on the outer circumference of the stator 50. The wire holder 57 is formed to withdraw respective terminals that have been connected on the inner terminal assembly holder 80. A hall IC assembly 58 that generates a position signal for detecting position of a rotor 60 that rotates in order to control a current supply for the coils of stator 50 employing a three-phase drive system is formed in the neighborhood of the wire holder 57.

If the respective division stator cores 51 are insert molded with a Bulk Molding Compound (BMC) except the division cores 53 that have been exposed the outside of the respective division stator cores 51, in order to cover spaces between the respective division stator core assemblies 2, the upper/lower wound coil portions, the bobbins 54, to thereby obtain an annular built-in type stator 50.

Another thermosetting resin can be used other than the BMC for the insert molding.

### C. Structure of rotor and process of manufacturing the rotor

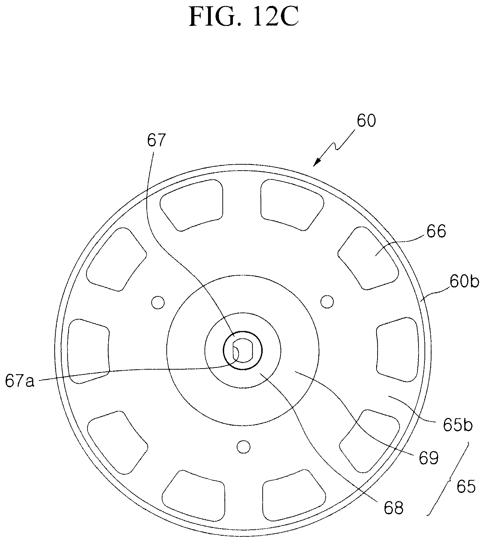

FIGs. 12A through 12C are a perspective view, a bottom plan view and a top plan view of a rotor that is used in a slim type motor according to this invention, respectively.

Referring to FIGs. 12A through 12C, a rotor 60 is manufactured by an insert molding method with a thermosetting resin, for example, BMC (Bulk Molding Compound), at a state where a bushing 67 for coupling a rotating shaft 70 is disposed on an injection molding mold so as to be substantially positioned at the center of gravity of the inner rotor 60a and the outer rotor 60b.

The inner rotor 60a and the outer rotor 60b are connected by a rotor holder 65 made of a thermosetting resin so as to maintain a state where a number of magnets 63 and 62 are arranged on the ring-shaped yokes 61 and 64 as illustrated in the cross-sectional view of FIG. 3. As a result, a trench style groove 65a into which a leading portion of the stator 50 is inserted is formed between the inner rotor 60a and the outer rotor 60b.

In addition, the rotor holder 65 is extended in a straight line by a given length toward the central portion of the rotor 60, and then is integrally connected with a bushing support portion 68 whose leading portion supports a bushing 67 through a slant connection portion 69 that is bent in two levels toward the center of gravity of the rotor 60. As a result, the rotor 60 has a slim type structure that intercepts thickness of the rotor 60 from being increased to the axial direction, and can minimize vibration occurring when the rotor 60 rotates. Therefore, the rotor holder 65 includes: a trench formation portion 65b that forms a trench style groove 65a that surrounds upper/lower surfaces exclusive of surfaces respectively facing a number of magnets 63 and 62 in the inner rotor 60a and the outer rotor 60b and outer circumference portions of ring-shaped yokes 61 and 64, in which a leading end of the stator 50 is inserted between the inner rotor 60a and the outer rotor 60b; a slant connection portion 69 that is extended in a straight line by a predetermined length to the center portion of the rotor 60 from the trench formation portion 65b, to then be bent in two levels toward the center of gravity of the rotor 60; and a bushing holder 68 that holds a bushing 67 therein and with the outer circumference portion of which a leading end of the slant connection portion 69 is connected.

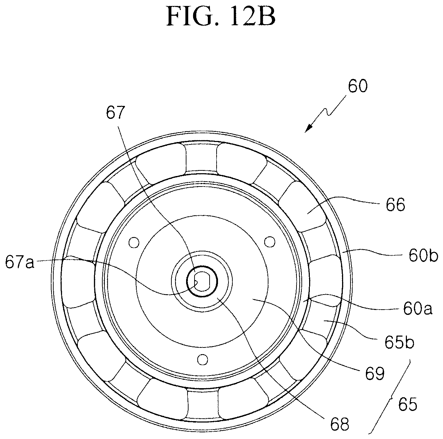

The bushing 67 located at the central portion of the rotor holder 65 has a serration structure in the inner circumference thereof in order to effectively transfer a rotational force to the rotating shaft 70 at the time of rotation of the rotor turning and is combined with the rotating shaft 70. Otherwise, the inner circumference surfaces facing each other at both sides of the rotor 60 run parallel each other and the rotor 60 can be combined with the rotating shaft 70 of FIG. 3, through the bushing 67 that has a rotating shaft engagement hole 67a which has a curved inner circumference surface between the parallel inner circumference surfaces of the rotor 60, as shown in FIGs. 12A and 12B. In this case, the rotating shaft 70 is also processed to have an outer circumference surface that corresponds to the rotating shaft engagement hole 67a of the bushing 67.

Referring to FIG. 3, in the case of the double rotor 60, the inner rotor 60a is formed by alternately arranging a number of magnets 63 that are respectively magnetized into a N-pole and a S-pole on the outside of the annular inner yoke 64 using adhesives, and the outer rotor 60b is formed by alternately arranging a number of magnets 62 that are respectively magnetized into a N-pole and a S-pole on the inside of the annular outer yoke 61 using adhesives. In this case, the magnets facing in the inner rotor 60a and the rotor 60b are arranged to have a reverse polarity to each other, for example.

In addition, the magnets of the inner rotor 60a and the outer rotor 60b can be integrally fabricated into an internal pattern that can be fixedly positioned on a mold without using a separate adhesion process.

At the time of performing the insert molding, the outer side surfaces of the inner rotor 60a and the outer rotor 60b are molded in an annular form except the facing surfaces of the facing magnets. Here, it is desirable to form a number of throughholes 66 that plays a role of an air circulation passage through which external air flows through the inner sides of the inner rotor 60a and the outer rotor 60b and both sides of the magnetic gap, in the trench style groove 65a of the rotor holder 65. As a result, the throughholes 66 transfer external air to the magnets of the inner rotor 60a and the outer rotor 60b and the stator 50, when the rotor 60 rotates, to thereby enhance a cooling performance.

Also, since a number of magnets 63 and 62 of the inner rotor 60a and the outer rotor 60b are arranged in a concentric circle by an insert molding method, a roundness of the rotor 60 becomes high, to thus be capable of maintaining a uniform magnetic gap when the rotor 60 is assembled with the stator 50.

Therefore, as described above, the rotor 60 and the stator 50 are designed into a slim type in this invention, respectively. Accordingly, overall thickness (that is, height) of a motor 1 can be reduced by mixing a slim type structure of the rotor 60 and the stator 50 in combination. It is possible to manufacture a motor 1 to have a thickness of 25mm or below, according to a preferred embodiment of the present invention.

In addition, in this invention, cores of the stator 50 are manufactured into perfect division stator cores in order to enhance a coil winding workability. Further, the double rotor 60 is employed in the present invention, to thereby enhance an efficiency of the magnetic circuit.

Moreover, in this invention, the magnetic circuit is designed in a manner of increasing the number of slots (that is, division cores) and the number of poles (that is, magnets) by increasing diameters of the rotor and the stator without reducing size of the respective magnets, to thereby lower a space factor of coils between a core and another. As a result, a terminal assembly holder 80 and housings 81-84 necessary to withdraw coils to the outside through the wire holder 57 from the three-phase coil terminals are arranged in a space between a division core and another. Accordingly, a termination processing of the coil 59a-59c is performed. A successive winding method is applied for division cores per each phase, to thereby remove connection of coils between the division cores, and to thus be capable of implementing the stator into a slim type structure.

In addition, in this invention, in spite of the slim type structure of the rotor and stator in the present invention, the number of slots (that is, division cores) and the number of poles (that is, magnets) are increased by increasing diameters of the rotor and the stator without reducing size of the respective magnets and division cores, to thereby implement a double-rotor/single-stator structure. Accordingly, in comparison with a general large-capacity motor of a single-rotor/single-stator structure, an efficiency and torque of the motor can be further increased.

As a result, in the case of a general motor of a single-rotor/single-stator structure, the maximum torque is 32 Nm, and the motor efficiency is 27.6%. However, the motor of the present invention has a slim type structure, and exhibits a high driving torque of the maximum torque of 42 Nm and a high efficiency of 44%. Therefore, the slim type motor of this invention has a torque enough for a quick inversion drive of the drum-washing machine.

In addition, this invention can provide a slim type motor that is embodied into thickness or height of about 25mm or below, and thus can embody a direct drive (DD) apparatus that is employed in a motor installation space that is given in the inside of a built-in type medium-size/small-size drum-washing machine, to thus rotationally drive a basket in the inside of the tub in a direct drive (DD) manner.

In addition, since the division stator core 51 is small, a waste rate of a silicon steel plate is smaller than that of a built-in type stator core structure. Accordingly, there is little material loss. Further, since shape of the division stator core 51 is simple, it is easy to manufacture the division stator core 51. In addition, it is possible to wind coils on the division stator core 51 by using a general-purpose winding machine, to thus reduce an investment ratio between a coil winding cost and a winding machine.

Moreover, since the rotor and the stator are formed of a built-in type structure by using resins in the above-described embodiments of the present invention, they are of an excellent durability and an excellent moisture-proof performance. Accordingly, the rotor and the stator according to the above-described embodiments of the present invention are appropriate for a drum drive source of a washing machine that is used under a high humidity environment, but are not limited thereto. In addition, it is possible to modify a structure of mounting a stator according to an apparatus employing a motor.

Therefore, in this invention, a number of division stator core assemblies are injection-molded by an insert molding method using a thermosetting resin, to thereby assemble a number of division stator cores without using any special core support plates, and thus heighten an assembly productivity of stators highly.

In addition, this invention provides an effect of enabling a stable motor drive by minimizing an axial height of a motor suitable to be installed in a built-in drum-washing machine whose motor accommodation space is narrow, and another effect of driving a motor so as to be suitable for a drum-washing machine that acts by a quick inversion method since a torque is high.

In addition, this invention provides an effect of enabling a motor to be applied to a slant type drum-washing machine although a slant angle of the slant type drum-washing machine becomes large, by minimizing an axial height of the motor.

This invention can provide a slim type motor that is embodied into thickness or height of about 25mm or below. Accordingly, the slim type motor can be applied to a direct drive (DD) apparatus that is employed in a built-in type medium-size/small-size drum-washing machine.

In addition, the slim type motor according to the present invention can be applied to a direct drive (DD) apparatus that is employed in a large-capacity drum-washing machine as well as a built-in type medium-size/small-size drum-washing machine.

The present invention has been described in detail with respect to the embodiments but is not limited to the above-described embodiments.

## Claims

1. A slim type stator (50) for use in a BLDC (Brushless Direct-Current) motor (1), the slim type stator comprising:
a number of division cores (51);
a number of bobbins (54) that form an annular division stator core assembly wherein each bobbin (54) comprises first and second flanges (54a, b) formed at one side of the bobbin and the other side thereof, respectively, and is molded on the outer circumference of the respective division cores (50), and wherein adjoining division cores are coupled through a coupling protrusion (B) and a coupling groove (A) that are formed at either side end of the first and second flange, respectively;
a three-phase coil (59) that is consecutively wound on the bobbins (54) of each phase that is alternately arranged per phase; and
a stator holder (52) that molds the division stator core assembly formed by winding the coils on the bobbins by an insert molding that uses a thermosetting resin, **characterized by** further comprising a terminal assembly holder (80) that comprises: first through third terminal housings (81, 82, 83) that are used to connect respective one-side coil terminals of the three-phase coils and respective outer withdrawal lead wires of the three phases; and a common terminal housing (84) that is used to form a neutral point by inter-connecting the other-side coil terminals of the respective three-phase coils, the first through third terminal housings (81, 82, 83) and the common terminal housing (84) are arranged by insertion between the division cores (51) on which the three-phase coils are respectively wound.

2. The slim type stator for use in the BLDC motor according to claim 1, wherein the respective bobbins (54) comprise first and second coupling protrusions (B, D) at the center of the lower end of the first and second flanges (54a, b), and wherein the terminal assembly holder (80) comprises coupling holes (85) that are combined with and fixed to the first and second coupling protrusions, respectively.

3. The slim type stator for use in the BLDC motor according to claim 1, wherein the stator holder (52) further comprises an annular inner extension portion (52a) whose leading end is bent in two levels so as to be fixedly combined with a tub combiner that is used in a drum-washing machine and that is projected inwards from the center portion of a stator, to thus be extended to the direction of the center of gravity of the stator from the outer side of the stator.

## Patentansprüche

1. Stator (50) in schmaler Bauweise zur Verwendung in einem BLDC-Motor (1) (bürstenloser Gleichstrommotor), wobei der Stator in schlanker Bauweise umfasst:
eine Anzahl von Teilungskernen (51);
eine Anzahl von Spulenkernen (54), die eine ringförmige Teilungsstatorkernanordnung bilden, wobei jeder Spulenkern (54) einen ersten und einen zweiten Flansch (54a, b) aufweist, die jeweils auf einer Seite des Spulenkerns und auf seiner anderen Seite ausgebildet sind, und auf dem Außenumfang der jeweiligen Teilungskerne (50) ausgeformt ist, und wobei angrenzende Teilungskerne durch einen Kopplungsvorsprung (B) und eine Kopplungsnut (A) gekoppelt sind, die an jedem Seitenende des ersten bzw. des zweiten Flansches ausgebildet sind;
eine Dreiphasenspule (59); die aufeinanderfolgend auf die Spulenkerne (54) jeder Phase gewickelt ist, die abwechselnd pro Phase angeordnet ist; und
einen Statorhalter (52), der die Teilungsstatorkernanordnung, die durch Wickeln der Spulen auf die Spulenkerne gebildet ist, durch einen Einspritzguss, der ein wärmehärtbares Harz verwendet, formt,
**dadurch gekennzeichnet, dass** er ferner einen Anschlussanordnungshalter (80) aufweist, der umfasst: erste bis dritte Anschlussgehäuse (81, 82, 83), die verwendet werden, um jeweilige einseitige Spulenanschlüsse der Dreiphasenspulen und jeweilige äußere Einziehleitungsdrähte der drei Phasen zu verbinden; und ein gemeinsames Anschlussgehäuse (84), das verwendet wird, um einen neutralen Punkt durch Miteinander-Verbinden der Spulenanschlüsse der anderen Seite der jeweiligen Dreiphasenspulen zu bilden, wobei die ersten bis dritten Anschlussgehäuse (81, 82, 83) und das gemeinsame Anschlussgehäuse (84) durch Einfügen zwischen die Teilungskerne (51), auf die die Drei-Phasen-Spulen jeweils gewickelt sind, angeordnet sind.

2. Stator in schmaler Bauweise zur Verwendung in dem BLDC-Motor nach Anspruch 1, wobei die jeweiligen Spulenkerne (54) erste und zweite Kopplungsvorsprünge (B, D) in der Mitte des unteren Endes des ersten und des zweiten Flansches (54a, b) aufweisen und wobei der Anschlussanordnungshalter (80) Kopplungslöcher (85) aufweist, die mit dem ersten bzw. zweiten Kopplungsvorsprung kombiniert und an ihnen fixiert sind.

3. Stator in schmaler Bauweise zur Verwendung in dem BLDC-Motor nach Anspruch 1, wobei der Statorhalter (52) ferner einen ringförmigen inneren Erstreckungsabschnitt (52a) aufweist, dessen voreilendes Ende in zwei Stufen gebogen ist, so dass es mit einem Wannenkombinator fest kombiniert wird, der in einer Trommel-Waschmaschine verwendet wird und der von dem Mittelabschnitt eines Stators nach innen vorsteht, um sich so in die Richtung des Schwerpunkts des Stators von der Außenseite des Stators zu erstrecken.

## Revendications

1. Stator de type mince (50) destiné à une utilisation dans un moteur BLDC (à courant continu sans balais) (1), le stator de type mince comprenant :
un certain nombre de noyaux de division (51) ;
un certain nombre de bobines (54) qui forment un assemblage de noyaux de division annulaire de stator, dans lequel chaque bobine (54) comprend des première et deuxième brides (54a, b) formées d'un côté de la bobine et de l'autre côté de celle-ci, respectivement, et est moulée sur la circonférence extérieure des noyaux de division (50) respectifs, et dans lequel des noyaux de division contigus sont couplés par l'intermédiaire d'une saillie de couplage (B) et d'une rainure de couplage (A) qui sont formées au niveau de l'une ou l'autre extrémité latérale des première et deuxième brides, respectivement ;
un bobinage triphasé (59) qui est enroulé de manière consécutive sur les bobines (54) de chaque phase qui est agencée par phase de manière alternée ; et
un porte-stator (52) qui moule l'assemblage de noyaux de division de stator formé par enroulement des bobinages sur les bobines grâce à un moulage d'insert faisant appel à une résine thermodurcissable, en ce qu'il comprend en outre un porte-ensemble borne (80) qui comprend : des premier à troisième logements de borne (81, 82, 83) qui sont utilisés pour raccorder des bornes de bobinage unilatérales respectives des bobinages triphasés et des fils conducteurs de retrait extérieurs respectifs des trois phases ; et un logement de borne (84) commun qui est utilisé pour former un point neutre par interconnexion des bornes de bobinage, situées de l'autre côté, des bobinages triphasés respectifs, les premier à troisième logements de borne (81, 82, 83) et le logement de borne commun (84) sont agencés par insertion entre les noyaux de division (51) sur lesquels sont respectivement enroulés les bobinages triphasés.

2. Stator de type mince destiné à une utilisation dans le moteur BLDC selon la revendication 1, dans lequel les bobines (54) respectives comprennent des première et deuxième saillies de couplage (B, D) au niveau du centre de l'extrémité inférieure des première et deuxième brides (54a, b), et dans lequel le porte-ensemble borne (80) comprend des trous de couplage (85) qui sont combinés avec les, et fixés aux, première et deuxième saillies de couplage, respectivement.

3. Stator de type mince destiné à une utilisation dans le moteur BLDC selon la revendication 1, dans lequel le porte-stator (52) comprend en outre une partie extension intérieure annulaire (52a) dont l'extrémité conductrice est courbée dans deux niveaux de manière à être combinée fixe avec un combineur de cuve qui est utilisé dans une machine à laver à tambour, et qui fait saillie vers l'intérieur à partir de la partie centrale d'un stator, de manière à s'étendre ainsi vers la direction du centre de gravité du stator à partir du côté extérieur du stator.
